# EUROPÄISCHE PATENTSCHRIFT

(11) **EP 3 143 370 B1**
(45) Veröffentlichungstag und Bekanntmachung des Hinweises auf die Patenterteilung: **26.09.2018**
(21) Anmeldenummer: 15727894.6
(22) Anmeldetag: 15.05.2015
(51) Int. Cl.: G01D 5/14, B66C 13/46, E04G 21/04

(54) **GROSSMANIPULATOR MIT KNICKMAST UND MIT MITTELN ZUR DREHWINKELMESSUNG**
LARGE MANIPULATOR HAVING AN ARTICULATED MAST AND HAVING MEANS FOR MEASURING ANGLES OF ROTATION
MANIPULATEUR DE GRANDE TAILLE ÉQUIPÉ D'UN MÂT ARTICULÉ ET DE MOYENS DE MESURE D'ANGLE DE ROTATION

(30) Priorität: 15.05.2014 DE 102014007071
(43) Veröffentlichungstag der Anmeldung: 22.03.2017
(73) Patentinhaber: Schwing GmbH, 44653 Herne (DE)
(72) Erfinder: VIERKOTTEN, Reiner, 46145 Oberhausen (DE); CONRAD, Carsten, 45661 Recklinghausen (DE)
(74) Vertreter: Isfort, Olaf
(86) Internationale Anmeldenummer: PCT/EP2015/060752
(87) Internationale Veröffentlichungsnummer: WO 2015/173385

(56) Entgegenhaltungen:
- WO-A1-2004/020765
- DE-A1-102011 018 267
- US-A1- 2008 191 689
- US-B1- 6 202 013

## Beschreibung

Die Erfindung betrifft einen Großmanipulator mit Mitteln zur Drehwinkelmessung, sowie eine Autobetonpumpe mit einem erfindungsgemäßen Großmanipulator.

Die US 6 202 013 B1 betrifft ein Überwachungssystem zur Überwachung der Position und Stabilität eines Großmanipulators.

Um eine sichere, einfache und genaue Bedienung eine Großmanipulators ermöglichen zu können, wird im Stand der Technik vorgeschlagen, beispielsweise zur Bestimmung des Faltzustands des Knickmasts, der Dämpfung von Mastschwingungen, der Lastmomentbegrenzung oder aber auch zur Koordinatensteuerung, den relativen momentanen Knickwinkel der einzelnen Mastsegmente zu messen. Aus dem Stand der Technik ist eine Vielzahl von hierzu geeigneten Messmethoden bekannt.

Die DE 10 2011 018 267 A1 betrifft einen Großmanipulator mit einer Messeinrichtung zur Messung des Drehwinkels eines Drehschemels.

Die Knickwinkelerfassung kann beispielsweise durch mechanische Drehwinkelmesssysteme erfolgen. Dies ist jedoch häufig zu ungenau oder zu teuer. Insbesondere ist eine derartige Knickwinkelerfassung schwierig, wenn, bei einem Großmanipulator einer Dickstoffpumpe, ein Dickstoffförderrohr durch die Knickgelenke geführt wird. Die mechanische Messung mit einem Drehwinkelmesser ist dann nur möglich, wenn zusätzliche mechanische Umlenkmechanismen eingebaut werden.

Es ist zudem auch bekannt, zur Winkelmessung die lineare Auslenkung der Antriebsaggregate, mit denen die Mastsegmente gegenüber einem jeweils benachbarten Segment oder gegenüber dem Drehschemel verschwenkt werden, zu messen und die gemessene Auslenkung dann in den zugehörigen Drehwinkel des Gelenks umzurechnen. Nachteilig hierbei ist allerdings, dass es häufig durch die Umrechnung zu Ungenauigkeiten kommt. Außerdem ist die erforderliche Messanordnung aufwendig.

Um den Knickwinkel zu erfassen, sind ferner auf Drehpotentiometern basierende Winkelsensoren bekannt. Die Potentiometermessung setzt Drehbewegungen in einen Widerstandswert um und hat den Vorteil, dass sofort nach dem Einschalten ein absoluter Wert zur Verfügung steht. Nachteilig hierbei ist allerdings der mechanische Verschleiß. Durch diesen verändert sich mit der Zeit der Widerstand, und damit werden die Messergebnisse verfälscht. Auch ist bei derartigen Messungen ein Versatz der Bauteile zueinander nur in sehr geringen Maßen tolerierbar.

Um die Winkelmessung robuster zu machen, werden im Stand der Technik Neigungssensoren verwendet. Ein Großmanipulator sowie eine Autobetonpumpe mit einer berührungslos arbeitenden Drehwinkelmessung zur Erfassung des Knickwinkels zwischen zwei benachbarten Mastsegmenten ist aus der WO 2004/020765 A1 bekannt. Nachteilig hierbei ist jedoch, dass die Neigungssensoren auch die Durchbiegung der Mastsegmente mit berücksichtigen. Dies ist insbesondere dann von Nachteil, wenn beim Zusammenfalten des Knickmasts für den Fahrbetrieb der Autobetonpumpe der Schließwinkel bestimmt werden muss. Des Weiteren sind Neigungssensoren teuer und zu Beginn jeder Messung ist es zwingend notwendig, die Sensoren zu kalibrieren. Hierdurch wird die Verwendung von Neigungssensoren sehr aufwendig.

Aus der US 2008/191689 A1 ist ein Drehwinkelsensor für ein Knickgelenk bekannt, wobei ein Element des Drehwinkelsensors in dem Gelenkbolzen integriert ist. Hierzu weist der Gelenkbolzen eine Bohrung auf die, die radial und axial in den Gelenkbolzen ragt. Eine solche Bohrung schwächt den Gelenkbolzen, so dass die durch den Gelenkbolzen übertragbaren Kräfte vermindert sind.

Es ist daher Aufgabe der Erfindung, einen verbesserten Großmanipulator mit Mitteln zur Drehwinkelmessung bereitzustellen. Es soll insbesondere eine wirkungsvolle und genaue Erfassung des Knickwinkels zwischen den einzelnen Mastsegmenten auf eine einfache Art und Weise gewährleistet werden.

Gelöst wird diese Aufgabe durch einen Großmanipulator mit den Merkmalen des Anspruchs 1 sowie durch eine Autobetonpumpe mit den Merkmalen des Anspruchs 15. Vorteilhafte Ausgestaltungen sind jeweils Gegenstand der abhängigen Ansprüche. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.

Ein erfindungsgemäßer Großmanipulator umfasst einen ausfaltbaren Knickmast, der einen um eine Hochachse drehbaren Drehschemel und eine Mehrzahl von Mastsegmenten aufweist, wobei die Mastsegmente an Knickgelenken um jeweils horizontale Knickachsen gegenüber einem benachbarten Mastsegment oder dem Drehschemel mittels je eines Antriebsaggregates begrenzt verschwenkbar sind. Die Vorrichtung zeichnet sich dadurch aus, dass sie wenigstens einen berührungslos arbeitenden Drehwinkelsensor zur Erfassung des Knickwinkels zwischen zwei benachbarten Mastsegmenten oder zwischen einem Mastsegment und dem benachbarten Drehschemel aufweist.

Die erfindungsgemäße Vorrichtung weist gegenüber dem Stand der Technik den Vorteil auf, dass hierdurch eine genaue, preisgünstige und langlebige Drehwinkelmessung möglich ist. Durch die mechanische Trennung zwischen den einzelnen Komponenten kommt es nicht zu einem mechanischen Verschleiß. Ferner sind durch die berührungslose Winkelmessung gewisse Toleranzen zwischen den Bauteilen zulässig, ohne dass dies sich negativ auf die Messwerte auswirkt.

Bevorzugt handelt es sich bei dem berührungslos arbeitenden Drehwinkelsensor um eine Hallsensoranordnung, die einen Hall-Sensor und wenigstens einen zum Hall-Sensor korrespondierenden beweglichen Magneten als Elemente des Drehwinkelsensors aufweist. Das von dem Magneten erzeugte magnetische Feld erzeugt abhängig von der Lage des Magneten zum Hall-Sensor einen Magnetfluss durch den Hall-Sensor und dadurch ein entsprechendes elektrisches Signal am Ausgang desselben.

Durch die Verwendung eines Hall-Sensors kann auch bei rauer Umgebung, wie beispielsweise bei Feuchtigkeit, Staub oder Vibrationen, eine hohe Messgenauigkeit sichergestellt werden. Auch ist der Einsatz bei beengten Einbauverhältnissen durch die sehr kompakte Abmessung möglich. Des Weiteren ist ein seitlicher Versatz bzw. eine Abstandsänderung zwischen Magneten und Sensor tolerierbar, ohne dass es zu einer Verfälschung der Messwerte kommt. Insgesamt kann durch die Hallsensoranordnung eine sehr genaue und langlebige Winkelmessung sichergestellt werden.

Der Hall-Sensor kann zur Erkennung von vorbestimmten Positionen einen Ausgang für ein digitales Signal aufweisen. Hierdurch ist es möglich, die Endlagen einer Bewegung zu detektieren und auszugeben. In Abhängigkeit von der Signalstärke lässt sich so eine nahezu beliebig genaue Endlagen- und Positionserkennung realisieren. Auch ist es möglich, dass der Hall-Sensor einen Ausgang für ein analoges Signal aufweist. Hierbei verändert sich das ausgegebene Signal in Abhängigkeit von der Änderung des Magnetflusses. Diese Änderung erfolgt, sobald der bewegliche wenigstens eine Magnet eine Relativbewegung zum Hall-Sensor ausführt. Diese Möglichkeit lässt folglich auch Rückschlüsse über die aktuelle Position zwischen den beiden Endlagen zu.

Vorteilhafterweise werden axial abfragende Sensoren verwendet. Sie liefern zuverlässige und genaue Ergebnisse hinsichtlich der Drehwinkelaufzeichnung. Grundsätzlich können aber auch radial abfragende Sensoren zur Drehwinkelmessung Verwendung finden. In Frage kommen z.B. sogenannte magnetische Inkrementalkodierer, bei denen ein magnetisierter Ring mit magnetischer Kodierung drehfest auf einer sich drehenden Welle angeordnet ist. Am Außenumfang, d.h. in radialer Anordnung zur Drehachse befindet sich ein ortsfester Sensorkopf, der auf die magnetische Kodierung anspricht und den Drehwinkel mit hoher Genauigkeit ermittelt.

Bevorzugt ist der berührungslos arbeitende Drehwinkelsensor unmittelbar an einer Knickachse angeordnet. Hierdurch kann der Knickwinkel zwischen zwei benachbarten Mastsegmenten unmittelbar erfasst werden. Eine Umrechnung muss nicht erfolgen.

Das Knickgelenk ist durch einen Gelenkbolzen gebildet. Der Gelenkbolzen verbindet zwei benachbarte Mastsegmente miteinander. Vorteilhafterweise ist der Gelenkbolzen mit einem der Mastsegmente drehfest verbunden. Bevorzugt ist der Gelenkbolzen dafür mittels einer Verdrehsicherung drehfest an einem der Mastsegmente befestigt. Zwischen dem Gelenkbolzen und der Verdrehsicherung kann eine stoffschlüssige Verbindung bestehen. Bevorzugt ist der Gelenkbolzen mittels Schweißen an der Verdrehsicherung befestigt. Es ist aber auch eine form- oder reibschlüssige Verbindung denkbar. Die Verbindung zwischen der Verdrehsicherung und dem Mastsegment erfolgt bevorzugt mittels einer form- oder reibschlüssigen Verbindung. Vorteilhafterweise werden die Verdrehsicherung und das Mastsegment mittels einer Schraube miteinander verbunden.

Zur Messung der Drehbewegung am Knickgelenk kann ein Element des Drehwinkelsensors drehfest mit dem Gelenkbolzen und das andere Drehwinkelsensorelement beabstandet dazu an dem zum Gelenkbolzen relativ verschwenkbaren Mastsegment oder am Drehschemel angeordnet sein. Bei einer Hallsensoranordnung können entweder der Hall-Sensor als auch der dazu korrespondierte Magnet am Gelenkbolzen angeordnet sein. Erfindungsgemäß ist ein Element des Drehwinkelsensors auf einer der Stirnflächen des Gelenkbolzens angeordnet.

Es ist aber auch möglich, dass keines der Drehwinkelsensorelemente an dem Gelenkbolzen angeordnet ist. Ein Element des Drehwinkelsensors kann an der Verdrehsicherung angeordnet sein. Um das Drehwinkelsensorelement möglichst platzsparend unterzubringen, kann es auch in einer Ausnehmung in der Verdrehsicherung angeordnet sein. Das wenigstens eine andere Sensorelement ist dabei beabstandet dazu an dem zur Verdrehsicherung relativ verschwenkbaren Mastsegment oder am Drehschemel angeordnet.

Vorteilhafterweise sind die Elemente des Drehwinkelsensors nicht unmittelbar mit den Mastsegmenten bzw. dem Drehschemel verbunden. Halteelemente verbinden die Elemente des Drehwinkelsensors mit den Mastsegmenten bzw. dem Drehschemel. Bevorzugt werden als Halteelemente Winkelbleche verwendet. Diese bieten den Vorteil, dass der Abstand und die Parallelität zwischen den Sensorelementen leicht eingestellt werden kann. Kommt es bei längerer Benutzung der Vorrichtung zu einem Versatz zwischen den zueinander beweglichen Elementen, dann kann durch das Austauschen oder das Verbiegen des Halteelements der Versatz leicht ausgeglichen werden, wodurch ein gleichbleibender Abstand bzw. eine Parallelität zwischen den Sensorelementen sichergestellt werden kann und eine genaue Winkelmessung langfristig ermöglicht wird.

Ist eine direkte bzw. unmittelbare Winkelmessung an der Knickachse bzw. am Gelenkbolzen nicht möglich, da durch das Knickgelenk beispielsweise ein Förderrohr geführt wird, kann die Drehbewegung an einem der Anlenkpunkte der Antriebsaggregate ermittelt werden und in den absoluten Knickwinkel des Knickgelenks umgerechnet werden. Erfindungsgemäß handelt es sich bei den Anlenkpunkten um die Stellen, an denen die Antriebsaggregate mit dem Drehschemel oder den Mastsegmenten verbunden sind. Die Antriebsaggregate sind relativ verschwenkbar zum Drehschemel bzw. zu den Mastsegmenten angeordnet. Zur Messung der Drehbewegung an einem Anlenkpunkt kann ein Element des Drehwinkelsensors, beispielsweise der Hall-Sensor, drehfest mit dem Antriebsaggregat und das andere Drehwinkelsensorelement, beispielsweise der wenigstens eine Magnet, drehfest mit dem Drehschemel oder einem der Mastsegmenten verbunden sein. Vorteilhafterweise werden als Antriebsaggregate Hydraulikzylinder verwendet.

Bevorzugt ist der Drehwinkelsensor am unteren Anlenkpunkt des Antriebsaggregats angeordnet. Dies hat den Vorteil, dass der Verkabelungsaufwand gering gehalten wird.

Grundsätzlich ist es aber auch möglich, dass der berührungslos arbeitende Drehwinkelsensor an anderen Drehpunkten der Vorrichtung angeordnet ist, um zur indirekten Bestimmung des Knickwinkels zwischen zwei benachbarten Mastsegmenten oder zwischen Mastsegment und Drehschemel verwendet zu werden. Es ist hierbei lediglich zu berücksichtigen, dass sich der Drehwinkel des Mastsegmentes aus dem gemessenen Drehwinkel eindeutig ableiten lassen muss.

Weist der Großmanipulator wenigstens einen Umlenkhebel auf, so kann ein Element des Drehwinkelsensors an einem Drehpunkt des Umlenkhebels eines Knickgelenkes angeordnet sein. Der Drehwinkelsensor ermittelt dabei die Drehbewegung des Umlenkhebels relativ zum Mastsegment oder relativ zu einem anderen Umlenkhebel, wodurch der absolute Knickwinkel des Knickgelenkes zwischen zwei benachbarten Mastsegmenten aus dem Sensorsignal berechenbar ist.

Um bei der Messung des Drehwinkels Redundanzen erzielen zu können, können mehrere Drehwinkelsensoren den Knickwinkel eines Mastgelenks erfassen. Hierdurch wird zudem erreicht, dass bei Ausfall eines Sensors ein weiterer Betrieb bzw. Notbetrieb mit den übrigen Sensoren möglich ist. Die Sensoren können an gegenüberliegenden Enden eines Gelenkbolzens angeordnet sein. Indem die Drehwinkelsensoren die Drehbewegung gegensinnig erfassen können, lässt sich daraus der Drehwinkel mit erhöhter Genauigkeit ermitteln.

Ferner können die Sensoren auch an verschiedenen Drehpunkten eines Knickgelenks, die über die zum jeweiligen Knickgelenk gehörenden Umlenkhebel der Gelenkkinematik definiert sind, angeordnet sein. Aus den Ausgangssignalen mehrerer Drehwinkelsensoren lässt sich der Drehwinkel zwischen den Mastsegmenten je nach Sensoranordnung auch mit erhöhter Genauigkeit berechnen.

Eine weitere Verbesserung der Messgenauigkeit lässt sich zudem dadurch erzielen, dass zwei Sensoranordnungen an einem Mastgelenk so angeordnet sind, dass eine Sensoranordnung den Drehwinkel direkt an einem Gelenkbolzen erfasst und eine zweite Sensoranordnung den Drehwinkel indirekt, z.B. an dem Anlenkpunkt eines Antriebsaggregates oder einem Umlenkpunkt der Gelenkkinematik erfasst. Durch eine rechentechnische Überlagerung des linearen Messsignals der Sensoranordnung am Gelenkbolzen mit einem nichtlinearen Messsignal einer Sensoranordnung an einem Umlenkhebel oder der Anlenkung eines Antriebsaggregates lässt sich der tatsächliche Drehwinkel der Knickachse mit erhöhter Genauigkeit bestimmen.

Auch die Erfassung des Drehwinkels mit zwei oder mehr Sensoranordnungen an einem Knickgelenk, von denen keines der Drehwinkelsensoranordnungen den Drehwinkel direkt am Gelenkbolzen erfasst, ist möglich. Der Drehwinkel lässt sich auch bei einer derartigen Sensoranordnung rechentechnisch aus den indirekt erfassten Messsignalen der Sensoranordnungen durch Überlagerung mit erhöhter Genauigkeit ableiten.

Der erfindungsgemäße Großmanipulator wird bevorzugt zur Verteilung von Dickstoffen verwendet. Insbesondere dient er zur Förderung von Beton.

Ferner ist Gegenstand der Erfindung eine Autobetonpumpe. Die erfindungsgemäße Autobetonpumpe weist ein Fahrzeuggestell, eine am Fahrzeuggestell angeordnete Dickstoffpumpe, insbesondere Betonpumpe, und einen Großmanipulator mit der oben beschriebenen Drehwinkelsensorik auf.

Der erfindungsgemäße Großmanipulator kann ferner Abstützsysteme aufweisen. Die Abstützung trägt das Kippmoment auf der Standfläche des Großmanipulators ab und verhindert dadurch das Umschlagen des Großmanipulators mit dem Mast. Um eine sichere, einfache und genaue Bedienung eine Großmanipulators ermöglichen zu können, ist grundsätzlich denkbar, dass die Schwenkwinkel der Abstützungen, insbesondere bei Klappstützen, erfasst werden. Hierdurch kann unter anderem sichergestellt werden, dass die Abstützungen auch tatsächlich bis zu der gewünschten Auslenkung ausgefahren worden sind, bevor mit dem Ausfahren des Mastes begonnen wird. Zudem lassen derartige Sensoren sich dafür verwenden, den Abspreizwinkel von nur teilweise ausgefahrenen Klappstützen zu ermitteln, um basierend auf dieser Information den Arbeitsbereich des Mastarmes einzuschränken, weil bei nur teilweise ausgefahrenen Abstützungen der volle Arbeitsbereich des Betonpumpenmastarmes nicht mehr genutzt werden kann Die Schwenkwinkel der Abstützungen, die beispielsweise als Klappstützen ausgebildet sind, können vorteilhaft mittels der oben beschriebenen berührungslosen Drehwinkelsensorik erfasst werden.

Die Erfindung sowie das technische Umfeld werden nachfolgend anhand der Figuren näher erläutert, es ist darauf hinzuweisen, dass die Figuren besonders bevorzugte Ausführungsvarianten der Erfindung zeigen. Die Erfindung ist jedoch nicht auf die gezeigten Ausführungsvarianten beschränkt.

Es zeigen:
- Fig. 1: schematische Darstellung eines erfindungsgemäßen Großmanipulators mit Mitteln zur Drehwinkelmessung,
- Fig. 2: schematische Schnittdarstellung durch ein Knickgelenk des Großmanipulators,
- Fig. 3: schematische Schnittdarstellung durch ein Knickgelenk in einer weiteren Ausgestaltungsform,
- Fig. 4: schematische Darstellung eines Teils eines erfindungsgemäßen Großmanipulators.

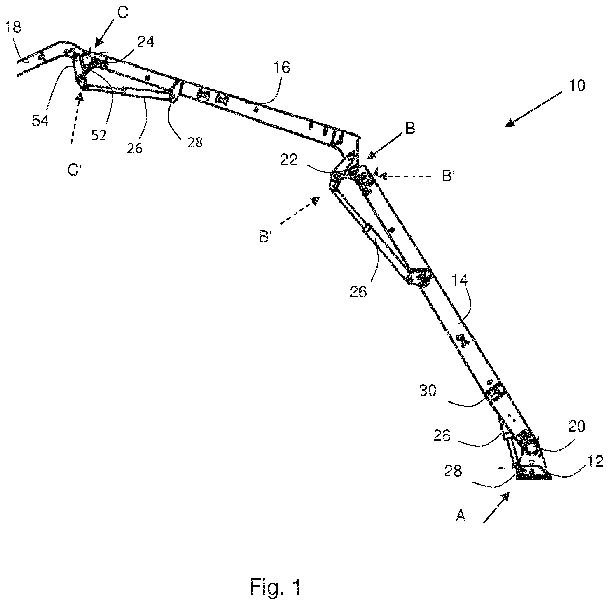

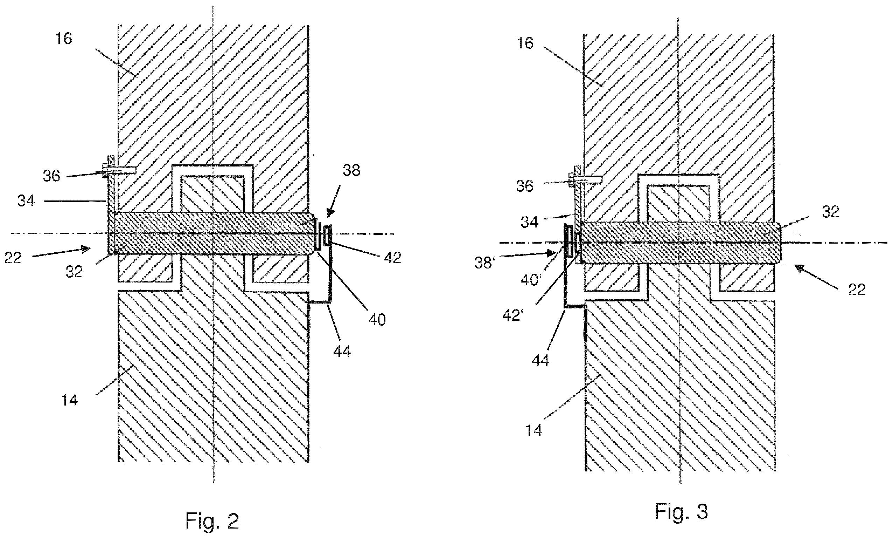

Figur 1 zeigt eine schematische Darstellung eines erfindungsgemäßen Großmanipulators 10 mit Mitteln zur Drehwinkelmessung. Die Vorrichtung 10 weist einen ausfaltbaren Knickmast mit einem um eine Hochachse drehbaren Drehschemel 12 und eine Mehrzahl von Mastsegmenten 14, 16, 18 auf. Die Mastsegmente 14, 16, 18 sind an Knickgelenken 20, 22, 24 um jeweils horizontale Knickachsen gegenüber einem benachbarten Mastsegment 14, 16, 18 oder dem Drehschemel 12 mittels je eines Antriebsaggregats 26 begrenzt verschwenkbar. Der Knickmast weist bevorzugt zwischen drei und fünf Mastsegmente 14, 16, 18 auf. Die Vorrichtung 10 weist wenigstens einen berührungslos arbeitenden Drehwinkelsensor 38, 38' (siehe Figuren 2 und 3) zur Erfassung des Knickwinkels zwischen zwei benachbarten Mastsegmenten 14, 16, 18 auf. Bevorzugt wird die Drehbewegung direkt an einem Gelenkbolzen 32 (siehe Figuren 2 und 3) gemessen. Indem durch einige Knickgelenke 20, 22, 24 ein Betonförderrohr 50 durch einen Hohlbolzen 46 geführt werden muss, sind diese für eine Anbringung des Drehwinkelsensors 38, 38', wie in den Figuren 2 und 3 beschrieben, nicht geeignet. Hierbei erfolgt die Drehwinkelmessung bevorzugt an den Messpunkten A und/oder C oder an den Messpunkten A, B' bzw. C oder C'. Der Messpunkt C am Drehpunkt zwischen dem Mastsegment 16 und dem Umlenkhebel 54 ist hier wegen des Verkabelungsaufwandes entlang des Mastes bevorzugt, es kann aber auch der Messpunkt C', dem Drehpunkt zwischen den Umlenkhebeln 52 und 54 erfolgen.

Figur 2 zeigt eine schematische Schnittdarstellung durch ein Knickgelenk 22 in einer ersten Ausgestaltungsform. An dem Knickgelenk 22 ist ein Gelenkbolzen 32 angeordnet. Der Gelenkbolzen 32 verbindet ein erstes 14 und ein zweites 16 Mastsegment miteinander, so dass die Mastsegmente 14, 16 an dem Knickgelenk 22 um eine horizontale Knickachse (in Figur 2 als Punkt-Strich-Linie dargestellt) mittels des entsprechenden Antriebsaggregats relativ zueinander verschwenkbar sind. Der Gelenkbolzen 32 ist mit dem Mastsegment 16 drehfest verbunden. Der Gelenkbolzen 32 ist somit wie auch das Mastsegment 16 relativ zu dem Mastsegment 14 verschwenkbar bzw. drehbar. Bevorzugt ist der Drehbolzen 32 mittels einer Verdrehsicherung 34 drehfest am Mastsegment 16 befestigt. Zwischen dem Gelenkbolzen 32 und der Verdrehsicherung 34 kann eine stoffschlüssige Verbindung, beispielsweise mittels Schweißen oder Kleben, bestehen. Es ist aber auch eine form- oder reibschlüssige Verbindung denkbar. Die Verbindung zwischen Verdrehsicherung 34 und Mastsegment 16 erfolgt bevorzugt mittels einer form- oder reibschlüssigen Verbindung. Hierzu wird vorteilhafterweise eine Schraubenverbindung 36 verwendet.

Zur unmittelbaren Erfassung des Knickwinkels zwischen den zwei benachbarten Mastsegmenten 14, 16 ist ein berührungslos arbeitender Drehwinkelsensor am Knickgelenk 22 angeordnet. Bei dem Drehwinkelsensor handelt es sich um eine Hallsensoranordnung 38, die einen Hall-Sensor 40 und wenigstens einen zum Hall-Sensor 40 korrespondierenden beweglichen Magneten 42 aufweist. Ein Element des Drehwinkelsensors, bevorzugt der Hall-Sensor 40, kann direkt am Gelenkbolzen 32 angeordnet sein. Bevorzugt ist der Hall-Sensor 40 an einer Stirnfläche des Gelenkbolzens 32 angeordnet. Das andere Element der Hallsensoranordnung 38, der Magnet 42, ist parallel beabstandet dazu an einem Halter 44, der mit dem ersten Mastsegment 14 verbunden ist, angeordnet. Bevorzugt handelt es sich bei dem Halter 44 um ein Winkelblech. Kommt es zu einer Relativbewegung zwischen den Mastsegmenten 14, 16, dann ändert sich das Magnetfeld und der Knickwinkel zwischen den Mastsegmenten 14, 16 kann daraus unmittelbar ermittelt werden. Denkbar ist aber auch eine umgekehrte Anordnung der Elemente der Hallsensoranordnung, bei der dann der Hall-Sensor 40 am Halter 44 angeordnet ist.

Figur 3 zeigt eine schematische Schnittdarstellung durch ein Knickgelenk 22 in einer weiteren Ausgestaltungsform. An dem Knickgelenk 22 ist ein Gelenkbolzen 32 angeordnet. Der Gelenkbolzen 32 verbindet das erste 14 und das zweite 16 Mastsegment miteinander, so dass die Mastsegmente 14, 16 um die horizontale Knickachse (in Figur 3 als Punkt-Strich-Linie dargestellt) relativ zueinander verschwenkbar sind. Der Gelenkbolzen 32 ist durch eine Verdrehsicherung 34 mit dem Mastsegment 16 drehfest verbunden.

Zur unmittelbaren Erfassung des Knickwinkels zwischen den zwei benachbarten Mastsegmenten 14, 16 ist eine Hallsensoranordnung 38', die einen Hall-Sensor 40' und wenigstens einen zum Hall-Sensor 40' korrespondierenden beweglichen Magneten 42' aufweist, im Knickgelenk 22 an der Knickachse angeordnet. Der Magnet 42' der Hallsensoranordnung 38' ist an der Verdrehsicherung 34, bevorzugt in einer Aussparung, angeordnet. Der Hall-Sensor 40' ist parallel beabstandet dazu an einem Halter 44, der mit dem ersten Mastsegment 14 verbunden ist, angeordnet. Kommt es zu einer Relativbewegung zwischen den Mastsegmenten 14, 16, dann ändert sich das Magnetfeld und der Knickwinkel zwischen den Mastsegmenten 14, 16 kann daraus unmittelbar ermittelt werden.

Denkbar ist aber auch eine umgekehrte Anordnung der Hallsensor-Elemente, so dass der Magnet 42' am Halter 44 und der Hall-Sensor 40' an der Verdrehsicherung 34 angeordnet ist.

Die Anbringung des Drehwinkelsensors an den Drehpunkten der Umlenkhebel (52, 54) kann analog hierzu an den Gelenkbolzen erfolgen und wird hier nicht weiter im Detail beschrieben.

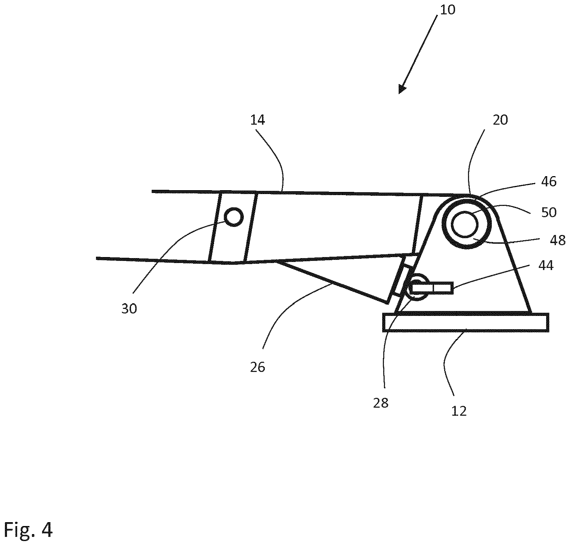

Figur 4 zeigt eine schematische Darstellung eines Ausschnitts eines erfindungsgemäßen Großmanipulators 10. Ein Mastsegment 14 ist an einem Knickgelenk 20 um eine horizontal verlaufende Knickachse gegenüber einem um eine Hochachse drehbaren Drehschemel 12 mittels eines Antriebsaggregats 26 verschwenkbar angeordnet. Das Knickgelenk 20 ist hier mit einem Hohlbolzen 46 mit einer Förderrohrdurchführung 46 für ein Betonförderrohr 50 ausgestattet. Hier ist eine direkte Messung des Knickwinkels mit der in Verbindung mit den Figuren 2 und 3 beschriebenen Anordnung nicht möglich. Das Antriebsaggregat 26 ist bevorzugt ein Hydraulikzylinder, der mit einem unteren Anlenkpunkt 28 mit dem Drehschemel 12 und mit einem oberen Anlenkpunkt 30 mit dem ersten Mastsegment 14 verbunden ist. Die Ermittlung der Drehbewegung erfolgt hier an einem der Anlenkpunkte der Antriebsaggregate 26. Die ermittelte Drehbewegung wird in den absoluten Drehwinkel des Drehgelenks 20 umgerechnet. Bevorzugt ist der berührungslos arbeitende Drehwinkelsensor 38, 38' am unteren Anlenkpunkt 28 angeordnet und erfasst die Drehbewegung des Antriebsaggregats 26 relativ zum Drehschemel 12 an dem Anlenkpunkt.

Um bei der Messung des Drehwinkels Redundanz zu erzielen, d.h. zur Sicherheit zwei Winkel-Messwerte miteinander vergleichen zu können, können zwei berührungslos messende Drehwinkelsensoranordnungen 38 an gegenüberliegenden Seiten eines Gelenkbolzens 32 angeordnet sein. Weil die zwei Drehwinkelsensoren 38 die Drehbewegung dann gegensinnig erfassen, lässt sich daraus der Drehwinkel zudem mit erhöhter Genauigkeit ermitteln und bei Ausfall eines Sensors ist immer noch ein Notbetrieb mit einem Drehwinkelsensor 38 möglich.

### Bezuaszeichenliste

- 10: Großmanipulator
- 12: Drehschemel
- 14: erstes Mastsegment
- 16: zweites Mastsegment
- 18: drittes Mastsegment
- 20: erstes Knickgelenk
- 22: zweites Knickgelenk
- 24: drittes Kickgelenk
- 26: Antriebsaggregat
- 28: unterer Anlenkpunkt
- 30: oberer Anlenkpunkt
- 32: Gelenkbolzen
- 34: Verdrehsicherung
- 36: Schraube
- 38, 38': Drehwinkelsensoranordnung
- 40, 40': Hall-Sensor
- 42, 42': Magneten
- 44: Halter
- 46: Hohlbolzen
- 48: Förderrohrdurchführung
- 50: Förderrohr
- 52, 54: Umlenkhebel
- A, B, C: Messpunkte
- A', B', C': Messpunkte

## Patentansprüche

1. Großmanipulator mit einem ausfaltbaren Knickmast, der einen um eine Hochachse drehbaren Drehschemel (12) und eine Mehrzahl von Mastsegmenten (14, 16, 18) aufweist, wobei die Mastsegmente (14, 16, 18) an Knickgelenken (20, 22, 24) um jeweils horizontale, Knickachsen gegenüber einem benachbarten Mastsegment (14, 16, 18) oder dem Drehschemel (12) mittels je eines Antriebsaggregates (26) begrenzt verschwenkbar sind, mit wenigstens einen berührungslos arbeitenden Drehwinkelsensor (38, 38') zur Erfassung des Knickwinkels zwischen zwei benachbarten Mastsegmenten (14, 16, 18) oder zwischen einem Mastsegment (14) und dem benachbarten Drehschemel (12),
**dadurch gekennzeichnet dass** an dem Knickgelenk (20, 22, 24) ein Gelenkbolzen (32) angeordnet ist, wobei ein Element des Drehwinkelsensors (38, 38') am Gelenkbolzen (32) auf einer der Stirnflächen des Gelenkbolzens angeordnet ist und dass ein Element des Drehwinkelsensors (38, 38') an einem Halteelement (44) angeordnet ist, das mit einem Mastsegment (14, 16, 18) verbunden ist.

2. Großmanipulator nach Anspruch 1, **dadurch gekennzeichnet, dass** es sich bei dem berührungslos arbeitenden Drehwinkelsensor um eine Hallsensoranordnung (38, 38') handelt, die einen Hall-Sensor (40, 40') und wenigstens einen zum Hall-Sensor (40, 40') korrespondierenden beweglichen Magneten (42, 42') aufweist.

3. Großmanipulator nach Anspruch 1 oder 2, **dadurch gekennzeichnet, dass** der berührungslos arbeitende Drehwinkelsensor (38, 38') an einer Knickachse angeordnet ist, wodurch er unmittelbar den Knickwinkel zwischen zwei benachbarten Mastsegmenten (14, 16, 18) erfasst.

4. Großmanipulator nach einem der vorangehenden Ansprüche, **dadurch gekennzeichnet, dass** der Gelenkbolzen (32) ein erstes und ein zweites Mastsegment (14, 16, 18) miteinander verbindet, drehfest mit einem der Mastsegmente (14, 16, 18) verbunden ist und zu dem anderen Mastsegment (14, 16, 18) relativ verschwenkbar ist.

5. Großmanipulator nach einem der Ansprüche 1 oder 4, **dadurch gekennzeichnet, dass** der Gelenkbolzen (32) mit einer Verdrehsicherung (34) an einem Mastsegment (14, 16, 18) drehfest angeordnet ist.

6. Großmanipulator nach dem vorangehenden Anspruch, **dadurch gekennzeichnet, dass** ein Element des Drehwinkelsensors (38, 38') an der Verdrehsicherung (34) bzw. in einer Aussparung in der Verdrehsicherung (34) angeordnet ist.

7. Großmanipulator nach einem der vorangehenden Ansprüche, **dadurch gekennzeichnet, dass** das Halteelement (44), als ein Winkelblech ausgebildet ist.

8. Großmanipulator nach Anspruch 1 oder 2, **dadurch gekennzeichnet, dass** ein Element des Drehwinkelsensors (38, 38') derart an einer Achse eines Anlenkpunkts (28, 30) eines Antriebsaggregats (26), bevorzugt eines Hydraulikzylinders, angeordnet ist, dass der Drehwinkelsensor (38, 38') die Drehbewegung des Antriebsaggregats (26) an dem Anlenkpunkt (28, 30) ermittelt, wodurch der absolute Knickwinkel des Knickgelenks (20, 22, 24) zwischen zwei benachbarten Mastsegmenten (14, 16, 18) berechenbar ist.

9. Großmanipulator nach dem vorangehenden Anspruch, **dadurch gekennzeichnet, dass** der Drehwinkelsensor (38, 38') an einem unteren Anlenkpunkt (28) des Antriebsaggregats (26) angeordnet ist.

10. Großmanipulator nach Anspruch 1 oder 2, **dadurch gekennzeichnet, dass** ein Element des Drehwinkelsensors (38, 38') an einem Drehpunkt (C, C') eines Umlenkhebels (52, 54) eines Knickgelenkes (24) angeordnet ist und das der Drehwinkelsensor (38, 38') die Drehbewegung des Umlenkhebels (52, 54) relativ zum Mastsegment (16) oder relativ zu dem jeweils anderen Umlenkhebel (52, 54) ermittelt, wodurch der absolute Knickwinkel des Knickgelenkes (20, 22, 24) zwischen zwei benachbarten Mastsegmenten (14, 16, 18) aus dem Sensorsignal berechenbar ist.

11. Großmanipulator nach einem der vorangehenden Ansprüche, **gekennzeichnet durch** zwei oder mehrere Drehwinkelsensoren (38, 38'), wobei die Drehwinkelsensoren (38, 38') den Knickwinkel zwischen zwei benachbarten Mastsegmenten (14, 16, 18) oder zwischen einem Mastsegment (14) und dem benachbarten Drehschemel (12) erfassen.

12. Großmanipulator nach Anspruch 11, **dadurch gekennzeichnet, dass** zwei Drehwinkelsensoren (38, 38') an den gegenüberliegenden Seiten eines Gelenkbolzens (32) angeordnet sind.

13. Großmanipulator nach Anspruch 11, **dadurch gekennzeichnet, dass** die Drehwinkelsensoren (38, 38') an unterschiedlichen Drehpunkten eines Knickgelenkes (20, 22, 24) angeordnet sind.

14. Autobetonpumpe aufweisend ein Fahrzeuggestell, eine am Fahrzeuggestell angeordnete Dickstoffpumpe, insbesondere Betonpumpe, und einen Großmanipulator nach einem der vorangehenden Ansprüche.

## Claims

1. A large-scale manipulator having an extendable folding boom that has a turntable (12), which is rotatable about a vertical axis, and a plurality of boom segments (14, 16, 18), wherein the boom segments (14, 16, 18) are pivotable to a limited extent at folding joints (20, 22, 24) about respectively horizontal folding axes with respect to an adjacent boom segment (14, 16, 18) or the turntable (12), by means of a respective drive unit (26),
wherein at least one contactlessly operating rotation angle sensor (38, 38') for sensing the folding angle between two adjacent boom segments (14, 16, 18) or between a boom segment (14) and the adjacent turntable (12),
**characterized by**
a pivot bolt (32) that is arranged at the folding joint (20, 22, 24), wherein one element of the rotation angle sensor (38, 38') is arranged at the pivot bolt (32) on one abutting face of the pivot bolt and that one element of the rotation angle sensor (38, 38') is arranged on a holding element (44) that is connected with a boom segments (14, 16, 18).

2. The large-scale manipulator as claimed in claim 1, **characterized in that** the contactlessly operating rotation angle sensor is a Hall sensor arrangement (38, 38') which has a Hall sensor (40, 40') and at least one movable magnet (42, 42') corresponding to the Hall sensor (40, 40').

3. The large-scale manipulator as claimed in claim 1 or 2, **characterized in that** the contactlessly operating rotation angle sensor (38, 38') is arranged on a folding axis, with the result that it directly senses the folding angle between two adjacent boom segments (14, 16, 18).

4. The large-scale manipulator as claimed in one of the preceding claims, **characterized in that** the pivot bolt (32) connects a first and a second boom segment (14, 16, 18) together, is connected to one of the boom segments (14, 16, 18) for conjoint rotation, and is pivotable relative to the other boom segment (14, 16, 18).

5. The large-scale manipulator as claimed in either of claims 1 and 4, **characterized in that** the pivot bolt (32) is arranged on a boom segment (14, 16, 18) for conjoint rotation by way of a twist prevention means (34).

6. The large-scale manipulator as claimed in the preceding claim, **characterized in that** one element of the rotation angle sensor (38, 38') is arranged on the twist prevention means (34), or in a cutout in the twist prevention means (34).

7. The large-scale manipulator as claimed in one of the preceding claims, **characterized in that** the holding element (44) is an angled plate.

8. The large-scale manipulator as claimed in claim 1 or 2, **characterized in that** one element of the rotation angle sensor (38, 38') is arranged on an axis of an articulation point (28, 30) of a drive unit (26), preferably of a hydraulic cylinder, such that the rotation angle sensor (38, 38') determines the rotary movement of the drive unit (26) at the articulation point (28, 30), with the result that it is possible to calculate the absolute folding angle of the folding joint (20, 22, 24) between two adjacent boom segments (14, 16, 18).

9. The large-scale manipulator as claimed in the preceding claim, **characterized in that** the rotation angle sensor (38, 38') is arranged at a lower articulation point (28) of the drive unit (26).

10. The large-scale manipulator as claimed in claim 1 or 2, **characterized in that** one element of the rotation angle sensor (38, 38') is arranged at a pivot point (C, C') of a bell crank (52, 54) of a folding joint (24), and **in that** the rotation angle sensor (38, 38') determines the rotary movement of the bell crank (52, 54) relative to the boom segment (16) or relative to the respectively other bell crank (52, 54), with the result that it is possible to calculate the absolute folding angle of the folding joint (20, 22, 24) between two adjacent boom segments (14, 16, 18) from the sensor signal.

11. The large-scale manipulator as claimed in one of the preceding claims, **characterized by** two or more rotation angle sensors (38, 38'), wherein the rotation angle sensors (38, 38') sense the folding angle between two adjacent boom segments (14, 16, 18) or between a boom segment (14) and the adjacent turntable (12).

12. The large-scale manipulator as claimed in claim 11, **characterized in that** two rotation angle sensors (38, 38') are arranged on the opposite sides of a pivot bolt (32) .

13. The large-scale manipulator as claimed in claim 11, **characterized in that** the rotation angle sensors (38, 38') are arranged at different pivot points of a folding joint (20, 22, 24).

14. A truck-mounted concrete pump having a chassis, a thick matter pump, in particular concrete pump, arranged on the chassis, and a large-scale manipulator as claimed in one of the preceding claims.

## Revendications

1. Grand manipulateur équipé d'un mât articulé extensible, qui présente une selle orientable (12) pouvant tourner autour d'un axe vertical et une multiplicité de segments de mât (14, 16, 18), dans lequel les segments de mât (14, 16, 18) peuvent pivoter de façon limitée à des articulations (20, 22, 24) chaque fois autour d'axes d'articulation horizontaux par rapport à un segment de mât voisin (14, 16, 18) ou par rapport à la selle orientable (12) chaque fois au moyen d'un ensemble d'entraînement (26), avec au moins un détecteur d'angle de rotation opérant sans contact (38, 38') pour la détection de l'angle de pivotement entre deux segments de mât voisins (14, 16, 18) ou entre un segment de mât (14) et la selle orientable voisine (12),
**caractérisé en ce qu'**un pivot d'articulation (32) est disposé à l'articulation (20, 22, 24), dans lequel un élément du détecteur d'angle de rotation (38, 38') est disposé sur le pivot d'articulation (32) sur une des faces frontales du pivot d'articulation et **en ce qu'**un élément du détecteur d'angle de rotation (38, 38') est disposé sur un élément de support (44), qui est assemblé à un segment de mât (14, 16, 18).

2. Grand manipulateur selon la revendication 1, **caractérisé en ce que** le détecteur d'angle de rotation opérant sans contact est un système de détecteur de Hall (38, 38'), qui présente un détecteur de Hall (40, 40') et au moins un aimant mobile (42, 42') correspondant au détecteur de Hall (40, 40').

3. Grand manipulateur selon la revendication 1 ou 2, **caractérisé en ce que** le détecteur d'angle de rotation opérant sans contact (38, 38') est disposé dans un axe de pivotement, et il détecte de ce fait directement l'angle de pivotement entre deux segments de mât voisins (14, 16, 18).

4. Grand manipulateur selon l'une quelconque des revendications précédentes, **caractérisé en ce que** le pivot d'articulation (32) relie l'un à l'autre un premier et un deuxième segment de mât (14, 16, 18), est assemblé sans rotation à un des segments de mât (14, 16, 18) et peut pivoter par rapport à l'autre segment de mât (14, 16, 18).

5. Grand manipulateur selon une des revendications 1 ou 4, **caractérisé en ce que** le pivot d'articulation (32) est disposé sans rotation avec une protection contre la rotation (34) sur un segment de mât (14, 16, 18).

6. Grand manipulateur selon la revendication précédente, **caractérisé en ce qu'**un élément du détecteur d'angle de rotation (38, 38') est disposé sur la protection contre la rotation (34) ou dans une découpe dans la protection contre la rotation (34).

7. Grand manipulateur selon l'une quelconque des revendications précédentes, **caractérisé en ce que** l'élément de maintien (44) est formé par une cornière en tôle.

8. Grand manipulateur selon la revendication 1 ou 2, **caractérisé en ce qu'**un élément du détecteur d'angle de rotation (38, 38') est disposé sur un axe d'un point d'articulation (28, 30) d'un ensemble d'entraînement (26), de préférence d'un vérin hydraulique, de telle manière que le détecteur d'angle de rotation (38, 38') détermine le mouvement de rotation de l'ensemble d'entraînement (26) au point d'articulation (28, 30), et il est ainsi possible de calculer l'angle de pivotement absolu de l'articulation (20, 22, 24) entre deux segments de mât voisins (14, 16, 18).

9. Grand manipulateur selon la revendication précédente, **caractérisé en ce que** le détecteur d'angle de rotation (38, 38') est disposé à un point d'articulation inférieur (28) de l'ensemble d'entraînement (26).

10. Grand manipulateur selon la revendication 1 ou 2, **caractérisé en ce qu'**un élément du détecteur d'angle de rotation (38, 38') est disposé à un point de rotation (C, C') d'un levier de renvoi (52, 54) d'une articulation (24) et **en ce que** le détecteur d'angle de rotation (38, 38') détermine le mouvement de rotation du levier de renvoi (52, 54) par rapport au segment de mât (16) ou par rapport à l'autre levier de renvoi respectivement (52, 54), et il est ainsi possible de calculer l'angle de pivotement absolu de l'articulation (20, 22, 24) entre deux segments de mât voisins (14, 16, 18) à partir du signal du détecteur.

11. Grand manipulateur selon l'une quelconque des revendications précédentes, **caractérisé par** deux ou plusieurs détecteurs d'angle de rotation (38, 38'), dans lequel les détecteurs d'angle de rotation (38, 38') détectent l'angle de pivotement entre deux segments de mât voisins (14, 16, 18) ou entre un segment de mât (14) et la selle orientable voisine (12).

12. Grand manipulateur selon la revendication 11, **caractérisé en ce que** deux détecteurs d'angle de rotation (38, 38') sont disposés sur les côtés opposés d'un pivot d'articulation (32).

13. Grand manipulateur selon la revendication 11, **caractérisé en ce que** les détecteurs d'angle de rotation (38, 38') sont disposés en différents points de rotation d'une articulation (20, 22, 24).

14. Pompe à béton automobile, présentant un châssis de véhicule, une pompe pour matières épaisses installée sur le châssis de véhicule, en particulier une pompe à béton, et un grand manipulateur selon l'une quelconque des revendications précédentes.
